# EUROPEAN PATENT SPECIFICATION

(11) **EP 2 458 811 B1**
(45) Date of publication and mention of the grant of the patent: **20.03.2019**
(21) Application number: 10852407.5
(22) Date of filing: 27.09.2010
(51) Int. Cl.: H04L 29/06, H04L 29/12, H04Q 11/00

(54) **METHOD, APPARATUS AND SYSTEM FOR PROCESSING USER IDENTITY INFORMATION IN GIGABIT PASSIVE OPTICAL NETWORK SYSTEM**
VERFAHREN, VORRICHTUNG UND SYSTEM ZUR VERARBEITUNG VON BENUTZERIDENTITÄTSINFORMATIONEN IN EINEM PASSIVEN OPTISCHEN GIGABIT-NETZWERKSYSTEM
PROCÉDÉ, APPAREIL ET SYSTÈME PERMETTANT DE TRAITER DES INFORMATIONS D'IDENTIFIANT DANS UN SYSTÈME DE RÉSEAU OPTIQUE PASSIF GIGABIT

(30) Priority: 03.06.2010 CN 201010197798
(43) Date of publication of application: 30.05.2012
(73) Proprietor: ZTE Corporation, Shenzhen, Guangdong 518057 (CN)
(72) Inventor: ZHANG, Yangchun, Shenzhen, Guangdong 518057 (CN); YANG, Donghu, Shenzhen, Guangdong 518057 (CN)
(74) Representative: Novagraaf Technologies
(86) International application number: PCT/CN2010/077358
(87) International publication number: WO 2011/150612

(56) References cited:
- WO-A1-2008/019620
- WO-A1-2009/033335
- CN-A- 1 968 089
- CN-A- 101 179 413
- CN-A- 101 179 413

## Description

### Field of the Invention

The present invention relates to the communication field, and in particular to a method, an apparatus and a system for processing user identity information in a GPON system.

### Background of the Invention

In the gigabit passive optical network (GPON) technology, the voice over internet protocol (VoIP) service is one of the core services of the GPON technology.

The GPON technology is an all-service bandwidth access technology, and voice service is an important component of the GPON technology. Since a GPON system has an excellent ability to support session initiation protocol (SIP), the SIP protocol is gradually becoming a preferred protocol type of the VoIP service in the GPON system.

In the session initiation protocol (SIP), identity information such as a username and a password of a terminal user is comprised, and in some situations where relative high security is required, the length of the username is likely to exceed 50 characters and the password is likely to exceed 25 characters. However, the existing standards define that the length of the username supported by the GPON system is 50 characters at most and the length of the password supported is 25 characters at most.

The inventors find that if relatively long user identity information is used during an SIP session, it would be caused that the GPON system can not identify the information correctly.

CN 101179413 A provides an optical network terminal management and control message generation and processing method and device, however, the above mentioned problem remains unsolved.

### Summary of the Invention

The present invention is proposed regarding the problem that the GPON system can not correctly identify overlong user identity information since the length of the SIP user identity information string in the GPON system exceeds a standard range. Therefore, the present invention provides a method for processing user identity information in the GPON system so as to solve at least one of the above problems.

A method for processing user identity information in a GPON system is provided according to one aspect of the present invention.

The method for processing the user identity information in the GPON system according to the present invention comprises: an optical line terminal (OLT) determining that a length of a string of the user identity information used for an SIP session exceeds a threshold; the optical line terminal OLT constructing an optical network terminal management and control interface (OMCI) message, wherein the OMCI message carries the user identity information used for the SIP session; the optical line terminal (OLT) sending the OMCI message to the optical network unit (ONU) or an optical network terminal ONT; and the optical network unit ONU or the optical network terminal ONT acquiring the user identity information from the OMCI message.

Furthermore, the step of the optical line terminal OLT constructing an optical network terminal management and control interface (OMCI) message comprises: the OLT creating a management entity (ME) for storing the user identity information; setting a pointer and associating the management entity ME with the pointer; and the OLT storing the pointer in the OMCI message.

Furthermore, the step of setting a pointer and associating the management entity (ME) with the pointer comprises: storing a management entity identification (ME ID) of the management entity (ME) in the pointer; and inserting leading characters before the ME ID, wherein the leading characters comprise a special identifier and a leading string.

Furthermore, the special identifier comprises a hexadecimal number AA 55; and the leading string comprises an American standard code for information interchange (ASCII) code of the string "pointer".

Furthermore, the step of the ONU or the ONT acquiring the user identity information from the OMCI message comprises: the ONU or the ONT receiving the OMCI message; acquiring the pointer in the OMCI message; and acquiring the user identity information associated with the pointer.

Furthermore, the user identity information is username and the threshold is 50 characters; and the user identity information is password and the threshold is 25 characters.

An apparatus for processing user identity information in a GPON system is provided according to one aspect of the present invention.

The apparatus for processing the user identity information in the GPON system according to the present invention comprises: a determining module, configured to determine that a length of a string of the user identity information used for an SIP session exceeds a threshold; a constructing module, configured to construct an optical network terminal management and control interface OMCI message, wherein the OMCI message carries the user identity information used for the SIP session; and a sending module, configured to send the OMCI message to an optical network unit ONU or an optical network terminal ONT.

Furthermore, a first setting module is configured to create a management entity ME for storing the user identity information; a second setting module is configured to set a pointer and associating the management entity ME with the pointer; and a third setting module is configured to store the pointer in the OMCI message.

A system for processing user identity information in a GPON system is provided according to another aspect of the present invention.

The system for processing the user identity information in the GPON system according to the present invention comprises: an optical line terminal (OLT), an optical network unit (ONU) or an optical network terminal (ONT); wherein the optical line terminal (OLT) comprises: a determining module, configured to determine that a length of a string of user identity information used for an SIP session exceeds a threshold; a constructing module, configured to construct an optical network terminal management and control interface (OMCI) message, wherein the OMCI message carries the user identity information used for the SIP session; and a sending module, configured to send the OMCI message to the optical network unit (ONU) or the optical network terminal (ONT); and the ONU or the ONT is configured to receive the above OMCI message and acquire the user identity information from the OMCI message.

By virtue of the present invention, the optical line terminal (OLT) is used for determining that the length of a string of the user identity information used for the SIP session exceeds a threshold; the optical line terminal (OLT) constructs an optical network terminal management and control interface OMCI message, wherein the OMCI message carries the user identity information used for the SIP session; and the optical line terminal (OLT) sends the OMCI message to the optical network unit (ONU) or the optical network terminal (ONT); and the optical network unit (ONU) or the optical network terminal (ONT) obtains the user identity information from the OMCI message, which solves the problem that the GPON system cannot correctly identify the overlong user identity information caused due to the length of the user identity information string in the GPON system exceeding the standard range, thus achieving the effects of setting and managing the overlong user identity information of the ONU/ONT end by the OLT end.

### Brief Description of the Drawings

Drawings, provided for further understanding of the present invention and forming a part of the specification, are used to explain the present invention together with embodiments of the present invention rather than to limit the present invention, wherein
Fig. 1 is a flowchart of a method for processing user identity information in a GPON system according to the embodiments of the present invention;
Fig. 2 is a flowchart of a method for an optical line terminal OLT processing the user identity information in the GPON system according to the embodiments of the present invention;
Fig. 3 is a flowchart of a method for an ONU/ONT processing the user identity information in the GPON system according to the embodiments of the present invention;
Fig. 4 is a schematic diagram of the attribute value data of a pointer attribute according to the embodiments of the present invention;
Fig. 5 is a schematic diagram of an apparatus for processing the user identity information in the GPON system according to the embodiments of the present invention; and
Fig. 6 is a schematic diagram of a system for processing the user identity information in the GPON system according to the embodiments of the present invention.

### Detailed Description of Embodiments

What should be noted is that the embodiments of the application and the features of the embodiments can be combined with each other if there is no conflict. The present invention will be described in detail with reference to the accompanying drawings in combination with the embodiments hereinafter.

A method for processing user identity information in a GPON system is provided according to the embodiments of the present invention.

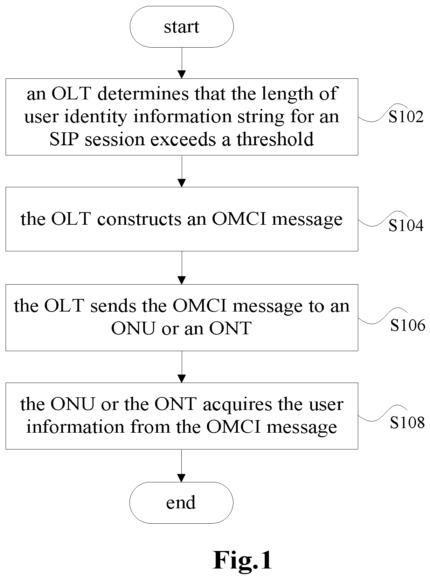

Fig. 1 is a flowchart of the method for processing the user identity information in the GPON system according to the embodiments of the present invention.

As shown in Fig. 1, the method comprises steps S102 to S108 as follows.

Step S102, an optical line terminal (OLT) determines that the length of a string of user identity information used for an SIP session exceeds a threshold.

Step S104, the optical line terminal (OLT) constructs an optical network terminal management and control interface (OMCI) message, wherein the OMCI message carries the user identity information used for the SIP session. In this step, when a user sets the user identity information, the inputted user information is not user identity information with a standard string length.

Step S106, the optical line terminal (OLT) sends the OMCI message to an optical network unit (ONU) or an optical network terminal (ONT).

Step S108, the optical network unit (ONU) or the optical network terminal (ONT) acquires the user identity information from the OMCI message. The terminal user obtains the data of the overlong user identity information by parsing the OMCI message.

The GPON system in the related art can not identify relatively long user identity information correctly. While in this embodiment the user identity information, the length of which exceeds a threshold, is sent to the ONU or the ONT by the OMCI message; since the GPON system can correctly parse the OMCI message, the correct identification of the relatively long user identity information is achieved.

In the embodiment of the present invention, the step that the optical line terminal OLT constructs an optical network terminal management and control interface (OMCI) message comprises: the OLT creating a management entity ME for storing the user identity information; setting a pointer and associating the management entity ME with the pointer; and the OLT storing the pointer in the OMCI message. The management entity ME created in this embodiment can be a large string entity, and the management of the overlong user identity information is achieved by the pointer pointing to the Large string entity; and if the overlong user identity information is managed according to a mode defined by standards, the user identity information will be intercepted due to the limit of attribute length, which incurs that the GPON system can not identify it correctly.

Preferably, the step of setting the pointer and associating the management entity ME with the pointer may comprise: storing a management entity identifier ME ID of the management entity ME in the pointer; and inserting leading characters before the ME ID, wherein the leading characters comprise a special identifier and a leading string. The ME ID information set in the pointer is to identify the specific attribute value of the pointer in the embodiments; inserting the leading characters before the ME ID information makes the GPON system determine, by using the leading characters, this attribute as a pointer type; and the user identity information which the pointer points to is overlong user identity information, and therefore the overlong user identity information can be acquired.

In this case, the special identifier comprises a hexadecimal number AA 55; and the leading string comprises the ASCII code of the string "pointer". When the special identifier is the hexadecimal number AA 55 and the attribute value of the leading string is the ASCII code of the string "pointer" in the GPON system, the system determines that the length of the string of the user identity information received exceeds the threshold.

In this embodiment, the step that the optical network unit ONU or the optical network terminal ONT acquires the user identity information from the OMCI message comprises: the ONU or the ONT receiving the OMCI message; acquiring the pointer in the OMCI message; and acquiring the user identity information associated with the pointer. This embodiment realizes that the ONU or the ONT identifies the overlong user identity information according to the pointer in the OMCI message, wherein this pointer points to the management entity ME which stores the overlong user identity information.

In this embodiment, the step of acquiring the user identity information associated with the pointer comprises: acquiring the ME ID of the pointer; acquiring data of the management entity ME corresponding to the ME ID from a management information database MIB; and parsing the data of the management entity ME to obtain the user identity information. The ONU or the ONT looks up the corresponding relation of the ME ID in the database MIB so as to obtain the data of the management entity ME pointed by the pointer; thus the ONU or the ONT identifies the overlong user identity information in the ME.

In this embodiment, the user identity information is a username and the threshold thereof is 50 characters; and the user identity information is a password and the threshold thereof is 25 characters. The GPON system identifies the username which exceeds 50 characters or identifies the user password which exceeds 25 characters. The username and the user password are the most commonly used user identity information, and this embodiment solves the problem of the overlong user identity information in most scenarios.

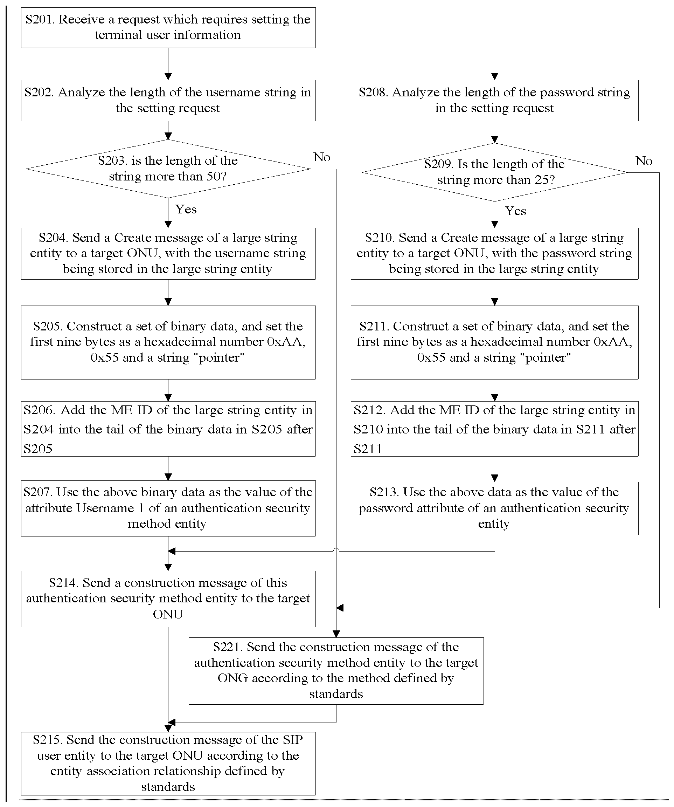

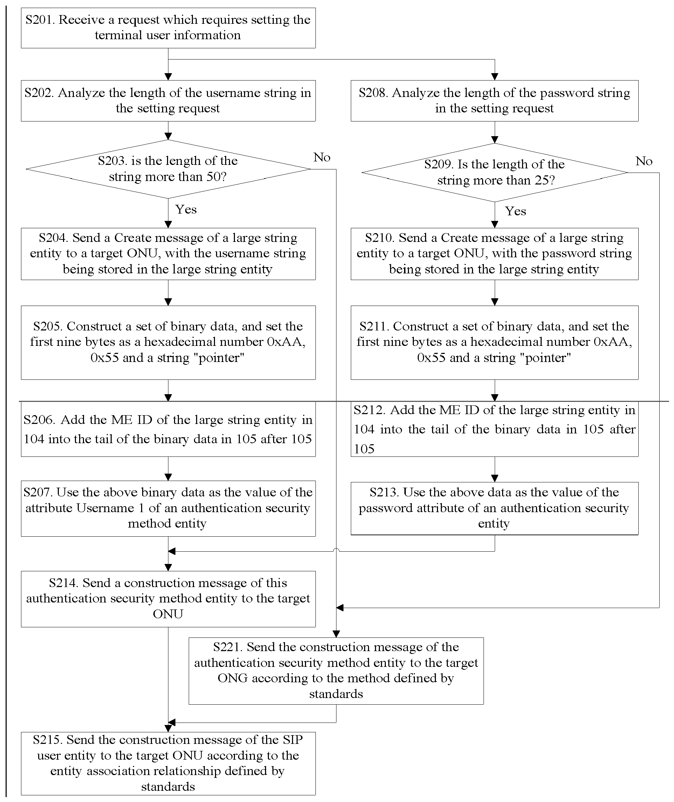

Fig. 2 is a flowchart of a method for an optical line terminal OLT processing the user identity information in the GPON system according to the embodiments of the invention.

As shown in Fig. 2, the method comprises the following steps S201 to S215.

Step S201: The optical line terminal (OLT) equipment receives a request command for requiring to manage SIP user identity information of a certain optical network unit/terminal ONU/ONT, and the command comprises key information such as a target ONU/ONT, a target SIP user required to be set (a plurality of SIP users may exist in each ONU/ONT), and the username and the password of the target SIP user.

In this step, when the optical line terminal (OLT) in the GPON system needs to set the SIP user identity information of the optical network unit/terminal (ONU/ONT), the username/password attribute(s) of an SIP user data management entity need(s) to be set.

Step S202: The length of the username string therein is acquired and parsed.

In this step, when the username is overlong user identity information, the length of which is longer than 50 characters (for the password, the length of which is longer than 25 characters), the step cannot be realized within the range of the GPON standards. Accordingly in this situation, the present invention is achieved by means of a Large string management entity dedicated for storing large strings.

Step S203: When the length of the username string obtained in step S202 is smaller than or equal to a length threshold defined by standards which is 50 characters, step S221 is performed; and otherwise, it is indicated that this SIP username is an overlong username and should be processed according to the method of the present invention, and step S204 is performed.

Step S204: A new large string entity is created. The overlong username information is stored in this large string entity, and the OMCI message of this entity is sent to the target ONU/ONT.

In this step of the embodiment, if the length of the username exceeds 50 characters, the OLT stores this overlong username information in one large string entity, and uses the attribute Username 1 used for storing the username in an authentication security method entity for storing the user identity information defined by standards as a pointer-type attribute, and stores the ME ID of this large string entity therein. In this embodiment, those attributes used for storing the management entity identifier (ME ID) information are called as the pointer-type attribute.

Step S205: A set of byte data group is created, with two bytes B0-B1 thereof being set as a hexadecimal number AA 55, and B2-B8 thereof being set as an ASCII code value of the string "pointer".

In this step, considering factors such as system reliability and compatibility with the standard implementation, when the attribute Username 1 used for storing the username in the authentication security method entity is used as the pointer-type attribute, considering the compatibility of the system with the management method defined in standards, in order to make the ONU/ONT understand that the attribute Username1 is used a pointer-type attribute rather than a value attribute (in this embodiment, those attributes directly used for storing attribute values are referred to as the value attribute), some leading characters used for identifying must be inserted before the ME ID of the large string entity saved in the Username 1. Therefore, when the value of the attribute Username 1 in the authentication security method entity received by the ONU/ONT comprises these leading characters, it is indicated that the attribute Username 1 is used as a pointer-type attribute and those leading characters are immediately followed by the ME ID of the Large string entity used for storing the username.

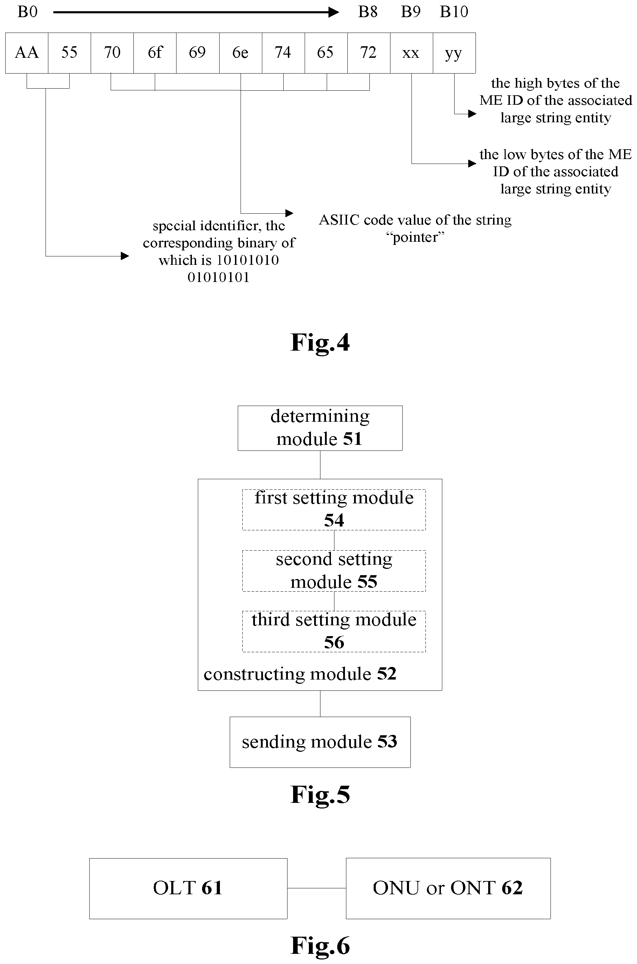

In this case, Fig. 4 is a schematic diagram of the attribute value data of the pointer-type attribute according to the embodiments of the present invention. As shown in Fig. 4, when the attribute Username 1 is used as the pointer-type attribute in the steps of this embodiment, the leading characters of the attribute value thereof are formed according to the following rules:
B0-B1: these two bytes are special identifier and consist of the hexadecimal number AA 55, the corresponding binary number of which is 10101010 01010101, which is a relative special binary string; B2-B8: these seven bytes are the ASCII code value of one leading string, and in the present invention the string "pointer" is used as the leading string; and B9-B10: these two bytes are the ME ID of the associated large string entity.
Step S206: The value of the ME ID of the large string entity newly created in step S204 is inserted into the tail of the byte data group in step S205, i.e., B9-B10.
Step S207: The above byte data group is used as the attribute value of the attribute Username 1 of the new authentication security method entity.

In this step, in the mode which comprises the leading string plus ME ID, the Username 1 attribute value being compatible with the standard mode of configuration can be achieved. That is to say, when the first two bytes of the Username 1 are AA 55 and the following seven bytes are the ASCII code value of the string "pointer", it is determined that the current SIP username is an overlong username; the username value is located in one large string entity; and the ME ID of the large string is located in B9 and B10 of the attribute Username 1.

Steps S208 to S213: The procedure of the above steps S202 to S207 are repeated; whether the user password in step S201 is an overlong password is judged; and processing and performing are executed according to the above steps.

In this step, if the SIP user password is an overlong string (exceeding the threshold 25 characters defined by standards), the implementation procedure and method thereof are substantially consistent with those of the overlong username, and will not be described here redundantly.

Step S214: After the above steps, the authentication security method entity data for storing the SIP user identity information is substantially constituted, and the OLT constructs an OMCI message based on these data and sends the OMCI message to the ONU/ONT.

Step S215: The OMCI message for managing the SIP user entity (user data) is constructed by using the ME ID of the authentication security method entity in step S214 as the value(s) of the username/password attribute(s), and this OMCI message is sent to the target ONU/ONT. Till now the setting process of the overlong SIP user identity information is completed.

Step S221: if the obtained user identity information does not exceed the length threshold defined by standards in steps S203 and S209, the related attributes of those related entities are set according to the method defined by standards, which will not be described here redundantly.

In the above steps, the attribute of the user identity information in the authentication security method entity of the OMCI message created by the OLT is set as the pointer-type attribute, this pointer being associated with the entity which stores the overlong user identity information, i.e., a definite large string entity; therefore it is achieved that a request with overlong user identity information of a terminal user is set according to demands.

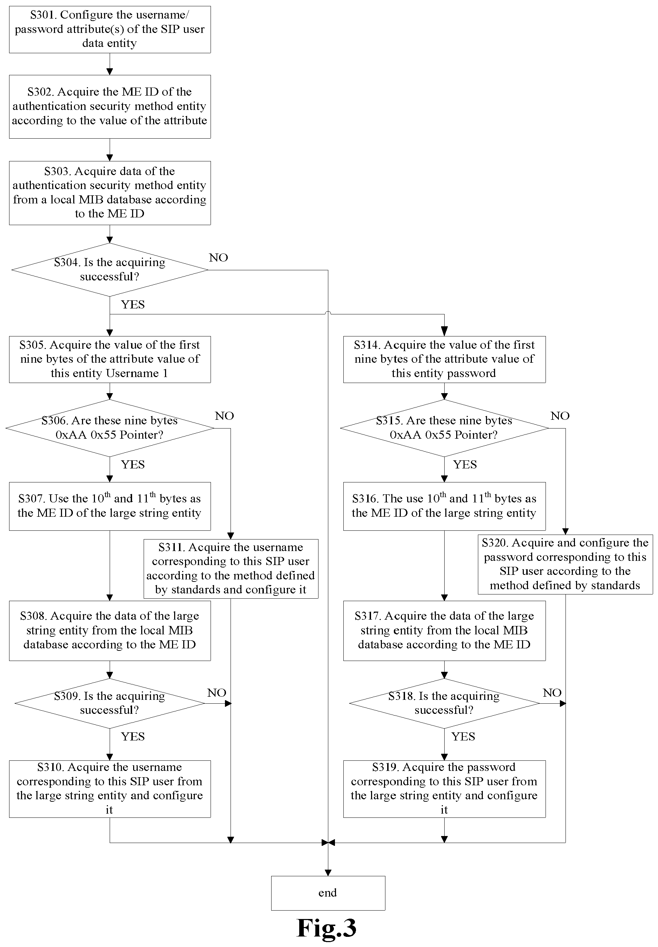

Fig. 3 is a flowchart of a method for the ONU/ONT processing the user identity information in the GPON system according to the embodiments of the present invention.

As shown in Fig. 3, if the ONU/ONT receives the related OMCI message in the steps shown in Fig. 2, this method comprises the following steps S301 to S319.

Step S301: The ONU/ONT receives an OMCI message from the OLT, wherein this message requires setting the username/password of the SIP user data entity, and the following step S302 is performed.

Step S302: The username/password attribute value(s) in step S301 is (are) used as the ME ID of the authentication security method entity.

Step S303: Detailed data of the authentication security method entity is acquired from a local MIB database of the ONU/ONT according to the ME ID obtained in step S302.

In this step, when the ONU/ONT receives such overlong username setting OMCI message group, data of the associated and corresponding Authentication security method entity is first obtained from a local MIB database according to the pointing relationship of the username/password attribute(s) of the SIP user data entity.

Step S304: It is determined whether the data information in step 303 is acquired successful, and if it is determined to be "yes", the following steps are performed.

Step S305: The attribute value of attribute Username 1 is inquired from the acquired data of the Authentication security method entity.

Step S306: It is determined whether the first two bytes of this attribute are the hexadecimal number AA 55 and whether the following byte group is the ASCII code value of the "pointer" string. If it is determined to be "yes", it is indicated that it is an overlong username and step S307 is performed; otherwise it is indicated that it is a user name length within the standard range, process is performed according to the method defined by standards, step S311 being performed.

In this step, if the first two bytes of the attribute Username 1 of the entity are the hexadecimal AA 55 and the following seven bytes are the ASCII code of the "pointer", it is indicated that this SIP username is an overlong string and the following two bytes are the ME ID of the large string entity for storing the overlong username. The overlong username string can be acquired from the local MIB database according to this ME ID.

Step S307: The ME ID information is acquired from the 10^{th} and 11^{th} bytes of the attribute value of the attribute Username 1.

In steps S305 to S307, when the value of the attribute Username 1 of the authentication security method entity received by the ONU/ONT comprises the leading string defined by the present invention, it is indicated that this attribute Username 1 is used as the pointer-type attribute, and those leading characters immediately followed by the ME ID of the large string entity are used for storing the username.

Step S308: The large string entity data is acquired from the local MIB database of the ONU/ONT by using the ME ID acquired in step 307 as the ME ID of the large string entity.

Step S309: If the target large string entity data is acquired successful in step S308, the following step S310 is performed.

Step S310: The overlong SIP username is parsed from the target large string entity, and this username is set into the current ONU/ONT. Till now, the configuration procedure of the overlong username is completed at the ONU/ONT side.

Step S311: When the leading byte group data of the overlong username of the present invention is not acquired in step S306, the username information of the current ONU/ONT is acquired and set according to the SIP username data storing method defined by standards.

Steps S314 to S320: Steps S305 to S311 are repeated, it is analyzed whether the SIP user password is an overlong password, wherein if it is determined to be "yes", the SIP user password of the current ONU/ONT is acquired and set according to the set mode of the overlong username; otherwise, the password information of the current ONU/ONT is acquired and set according to the SIP user password data storing method defined by standards.

In this embodiment, the ONU/ONT acquires the overlong character data by parsing the received OMCI message, thereby achieving setting the overlong user identity information at the ONU/ONT.

It can be seen from the above description that the present invention can achieve the following technical effects: the present invention relates to the management and configuration procedure of both OLT and ONU/ONT, and achieves the applications of user identity information performed at both OLT and ONU/ONT in the GPON system by constructing the OMCI message for storing the large string management entity.

It should be noted that the steps as shown in the flowcharts of the accompanying drawings can be performed in a computer system such as a set of computer executable instructions; and although the logical order is shown in the flowcharts, in some cases, the shown and described steps can be performed in an order which is different from the order herein.

An apparatus for an optical line terminal managing the SIP user identity information is provided according to the embodiments of the present invention.

Fig. 5 is a schematic diagram of an apparatus for processing the user identity information in the GPON system according to the embodiments of the invention. This apparatus comprises: a determining module **51**, a constructing module **52,** and a sending module **53**.

In this case, the determining module **51** is configured to determine that the length of a string of the user identity information used for an SIP session exceeds a threshold;
the constructing module **52** is configured to construct an OMCI message, wherein the OMCI message carries the user identity information used for the SIP session; and
the sending module **53** is configured to send the OMCI message to an ONU or an ONT.

Preferably, the constructing module **52** comprises: a first setting module **54**, a second setting module **55**, and a third setting module **56**.

In this case, the first setting module **54** is configured to create a management entity ME for storing the user identity information;
the second setting module **55** is configured to set a pointer and associate it with the management entity, i.e., setting a pointer in an authentication security method entity in an OLT, and the pointer being associated with a large string management entity; and
the third setting module **56** is configured to store the pointer in the OMCI message, i.e., the OLT constructs the OMCI message according to data of the authentication security method entity.

A system for processing user identity information in a GPON system is provided according to the embodiments of the present invention.

Fig. 6 is a schematic diagram of a system for processing the user identity information in the GPON system according to the embodiments of the present invention.

As shown in Fig. 6, the system comprises: an optical line terminal OLT **61**, an optical network unit ONU or an optical network terminal ONT **62**.

In this case, the apparatus for processing the user identity information in the optical line terminal OLT **61** comprises: a determining module **51**, configured to determine that the length of character string of the user identity information for an SIP session exceeds a threshold; a constructing module **52**, configured to construct an optical network terminal management and control interface OMCI message, wherein the OMCI message carries the user identity information used for the SIP session; and a sending module **53**, configured to send the OMCI message to the optical network unit ONU or the optical network terminal ONT. The ONU or the ONT is configured to receive the OMCI message and acquire the user identity information from the OMCI message.

In this embodiment, the user information which exceeds a predetermined length is configured in the GPON system, thereby solving the problem that the GPON system can not identify the overlong user information and achieving the applications of the overlong user information in the GPON system.

Obviously, those skilled in the art shall understand that individual modules or individual steps of the present invention can be implemented with general computing devices, they may be integrated in a single computing device or distributed in network formed by a plurality of computing devices, optionally, they may be implemented by using program codes executable by computing devices, thus they may be stored in memory devices for execution by the computing devices, or implemented by making them into integrated circuit module respectively, or by making several modules or steps in to a single IC. Thus, the present invention is not limited to any particular combination of hardware and software.

Above description is only to illustrate the preferred embodiments but not to limit the present invention. Various alterations and changes to the present invention are apparent to those skilled in the art.

## Claims

1. A method for processing user identity information in a gigabit passive optical network, GPON, system, **characterized by** comprising:
an optical line terminal, OLT, determining that a length of a string of user identity information used for a session initiation protocol, SIP, session exceeds a threshold (S102);
the OLT constructing an optical network terminal management and control interface, OMCI, message, wherein the OMCI message carries the user identity information used for the SIP session (S104);
the OLT sending the OMCI message to an optical network unit, ONU, or an optical network terminal, ONT (S 106); and
the ONU or the ONT acquiring the user identity information from the OMCI message (S108).

2. The method according to Claim 1, **characterized in that** the step of the OLT constructing the OMCI message (S104) comprises:
the OLT creating a management entity, ME, for storing the user identity information;
setting a pointer and associating the ME with the pointer; and
the OLT storing the pointer in the OMCI message.

3. The method according to Claim 2, **characterized in that** the step of setting the pointer and associating the ME with the pointer comprises:
storing a management entity identifier, ME ID, of the ME in the pointer; and
inserting leading characters before the ME ID, wherein the leading characters comprise a special identifier and a leading string.

4. The method according to Claim 3, **characterized in that** the special identifier comprises a hexadecimal number AA 55; and the leading string comprises an American standard code for information interchange, ASCII, code of a string "pointer".

5. The method according to Claim 4, **characterized in that** the step of the ONU or the ONT acquiring the user identity information from the OMCI message (S108) comprises:
the ONU or the ONT receiving the OMCI message;
acquiring the pointer in the OMCI message; and
acquiring the user identity information associated with the pointer.

6. The method according to Claim 5, **characterized in that** the step of acquiring the user identity information associated with the pointer comprises:
acquiring the ME ID of the pointer;
acquiring data of the ME corresponding to the ME ID from a management information database, MIB; and
parsing the data of the ME and obtaining the user identity information.

7. The method according to any of Claims 1 to 6, **characterized in that** the user identity information is username and user password, wherein the threshold for the username is 50 characters, and the threshold for the user password is 25 characters.

8. An apparatus for processing user identity information in a gigabit passive optical network, GPON, system, **characterized by** comprising:
a determining module (51), configured to determine that a length of a string of the user identity information used for a session initiation protocol, SIP, session exceeds a threshold;
a constructing module (52), configured to construct an optical network terminal management and control interface, OMCI, message, wherein the OMCI message carries the user identity information used for the SIP session; and
a sending module (53), configured to send the OMCI message to an optical network unit, ONU, or an optical network terminal, ONT.

9. The apparatus according to Claim 8, **characterized in that** the constructing module (52) comprises:
a first setting module (54), configured to create a management entity, ME, for storing the user identity information;
a second setting module (55), configured to set a pointer and associating the ME with the pointer; and
a third setting module (56), configured to store the pointer in the OMCI message.

10. A system for processing user identity information in a gigabit passive optical network, GPON, system, comprising: an optical line terminal, OLT (61), an optical network unit, ONU or an optical network terminal, ONT (62), wherein
the OLT (61) is **characterized by**:
a determining module (51), configured to determine that a length of a string of user identity information used for a session initiation protocol, SIP, session exceeds a threshold;
a constructing module (52), configured to construct an optical network terminal management and control interface, OMCI, message, wherein the OMCI message carries the user identity information used for the SIP session; and
a sending module (53), configured to send the OMCI message to the ONU or the ONT; and
the ONU or the ONT (62) is configured to receive the OMCI message and acquire the user identity information from the OMCI message.

## Patentansprüche

1. Verfahren zum Verarbeiten von Benutzeridentitätsinformationen in einem passiven optischen Gigabit-Netzwerksystem, GPON, **dadurch gekennzeichnet, dass** es umfasst:
Bestimmen, durch ein optisches Leitungsterminal, OLT, dass eine Länge einer Zeichenfolge von Benutzeridentitätsinformationen, welche für eine Sitzung eines Sitzungseinleitungsprotokolls, SIP, verwendet wird, eine Schwelle überschreitet (S102);
Herstellen, durch das OLT, einer Nachricht einer optischen Netzwerkterminalmanagement und Kontrollschnittstelle, OMCI, wobei die OMCI-Nachricht die Benutzeridentitätsinformationen enthält, welche für die SIP-Sitzung verwendet werden (S104);
Senden, durch das OLT, der OMCI-Nachricht an eine optische Netzabschlusseinheit, ONU, oder ein optisches Netzwerkterminal, ONT, (S106); und
Erfassen, durch die ONU oder das ONT, der Benutzeridentitätsinformationen aus der OMCI-Nachricht (S108).

2. Verfahren nach Anspruch 1, **dadurch gekennzeichnet, dass** der Schritt des Herstellens der OMCI-Nachricht durch das OLT (S104) umfasst:
Erstellen, durch das OLT, einer Managementinstanz, ME, zum Speichern der Benutzeridentitätsinformationen;
Einstellen eines Pointers und Verknüpfen der ME mit dem Pointer; und
Speichern, durch das OLT, des Pointers in der OMCI-Nachricht.

3. Verfahren nach Anspruch 2, **dadurch gekennzeichnet, dass** der Schritt des Einstellens des Pointers und Verknüpfens der ME mit dem Pointer umfasst:
Speichern eines Managementinstanzidentifikators, ME ID, der ME in dem Pointer; und
Einsetzen von führenden Zeichen vor der ME ID, wobei die führenden Zeichen einen speziellen Identifikator und eine führende Zeichenfolge umfassen.

4. Verfahren nach Anspruch 3, **dadurch gekennzeichnet, dass** der spezielle Identifikator eine hexadezimale Zahl AA 55 umfasst; und die führende Zeichenfolge einen ASCII-Code, American Standard Code for Information Interchange, einer Zeichenfolge "Pointer" umfasst.

5. Verfahren nach Anspruch 4, **dadurch gekennzeichnet, dass** der Schritt des Erfassens, durch die ONU oder das ONT, der Benutzeridentitätsinformationen aus der OMCI-Nachricht (S108) umfasst:
Empfangen, durch die ONU oder das ONT, der OMCI-Nachricht;
Erfassen des Pointers in der OMCI-Nachricht; und
Erfassen der Benutzeridentitätsinformationen, welche mit dem Pointer verknüpft sind.

6. Verfahren nach Anspruch 5, **dadurch gekennzeichnet, dass** der Schritt des Erfassens der Benutzeridentitätsinformationen, welche mit dem Pointer verknüpft sind, umfasst:
Erfassen der ME ID des Pointers;
Erfassen von Daten der ME, welche der ME ID entsprechen, von einer Managementinformations-Datenbank, MIB; und
Parsen der Daten der ME und Erhalten der Benutzeridentitätsinformationen.

7. Verfahren nach einem der Ansprüche 1 bis 6, **dadurch gekennzeichnet, dass** die Benutzeridentitätsinformationen Benutzername und Benutzerkennwort sind, wobei die Schwelle für den Benutzernamen 50 Zeichen ist, und die Schwelle für das Benutzerkennwort 25 Zeichen ist.

8. Einrichtung zum Verarbeiten von Benutzeridentitätsinformationen in einem passiven optischen Gigabit-Netzwerksystem, GPON, **dadurch gekennzeichnet, dass** sie umfasst:
ein Bestimmungsmodul (51), welches konfiguriert ist, zu bestimmen, dass eine Länge einer Zeichenfolge von den Benutzeridentitätsinformationen, welche für eine Sitzung eines Sitzungseinleitungsprotokolls, SIP, verwendet wird, eine Schwelle überschreitet;
ein Herstellungsmodul (52), welches konfiguriert ist, eine Nachricht einer optischen Netzwerkterminalmanagement und Kontrollschnittstelle, OMCI herzustellen, wobei die OMCI-Nachricht die Benutzeridentitätsinformationen enthält, welche für die SIP-Sitzung verwendet werden; und
ein Sendemodul (53), welches konfiguriert ist, die OMCI-Nachricht an eine optische Netzabschlusseinheit, ONU, oder ein optisches Netzwerkterminal, ONT, zu senden.

9. Einrichtung nach Anspruch 8, **dadurch gekennzeichnet, dass** das Herstellungsmodul (52) umfasst:
ein erstes Einstellungsmodul (54), welches konfiguriert ist, eine Managementinstanz, ME, zum Speichern der Benutzeridentitätsinformationen zu erstellen;
ein zweites Einstellungsmodul (55), welches konfiguriert ist, einen Pointer einzustellen und die ME mit dem Pointer zu verknüpfen; und
ein drittes Einstellungsmodul (56), welches konfiguriert ist, den Pointer in der OMCI-Nachricht zu speichern.

10. System zum Verarbeiten von Benutzeridentitätsinformationen in einem passiven optischen Gigabit-Netzwerksystem, GPON, umfassend: ein optisches Leitungsterminal, OLT (61), eine optische Netzabschlusseinheit, ONU oder ein optisches Netzwerkterminal, ONT (62), wobei
das OLT (61) **gekennzeichnet ist durch**:
ein Bestimmungsmodul (51), welches konfiguriert ist, zu bestimmen, dass eine Länge einer Zeichenfolge von Benutzeridentitätsinformationen, welche für eine Sitzung eines Sitzungseinleitungsprotokolls, SIP, verwendet wird, eine Schwelle überschreitet;
ein Herstellungsmodul (52), welches konfiguriert ist, eine Nachricht einer optischen Netzwerkterminalmanagement und Kontrollschnittstelle, OMCI herzustellen, wobei die OMCI-Nachricht die Benutzeridentitätsinformationen enthält, welche für die SIP-Sitzung verwendet werden; und
ein Sendemodul (53), welches konfiguriert ist, die OMCI-Nachricht an die ONU oder das ONT zu senden; und
die ONU oder das ONT (62) konfiguriert ist, die OMCI-Nachricht zu empfangen und die Benutzeridentitätsinformationen aus der OMCI-Nachricht zu erfassen.

## Revendications

1. Procédé de traitement d'informations d'identité d'utilisateur dans un système de réseau optique passif gigabit, GPON, **caractérisé en ce qu'**il comprend :
la détermination, par un terminal de ligne optique, OLT, qu'une longueur d'une chaîne d'informations d'identité d'utilisateur utilisées pour une session de protocole d'ouverture de session, SIP, dépasse un seuil (S102) ;
la construction, par l'OLT, d'un message d'interface de commande et de gestion de terminal de réseau optique, OMCI, dans lequel le message OMCI transporte les informations d'identité d'utilisateur utilisées pour la session SIP (S104) ;
la transmission, par l'OLT, du message OMCI à une unité de réseau optique, ONU, ou un terminal de réseau optique, ONT, (S106) ; et
l'acquisition, par l'ONU ou l'ONT, des informations d'identité d'utilisateur à partir du message OMCI (S108).

2. Procédé selon la revendication 1, **caractérisé en ce que** l'étape de construction, par l'OLT, du message OMCI (S104) comprend :
la création, par l'OLT, d'une entité de gestion, ME, pour stocker les informations d'identité d'utilisateur ;
l'établissement d'un pointeur et l'association de la ME au pointeur ; et
le stockage, par l'OLT, du pointeur dans le message OMCI.

3. Procédé selon la revendication 2, **caractérisé en ce que** l'étape d'établissement du pointeur et d'association de la ME au pointeur comprend :
le stockage d'un identificateur d'entité de gestion, ID ME, de la ME dans le pointeur ; et
l'insertion de caractères de début avant l'ID ME, dans lequel les caractères de début comprennent un identificateur spécial et une chaîne de début.

4. Procédé selon la revendication 3, **caractérisé en ce que** l'identificateur spécial comprend un nombre hexadécimal AA 55 ; et la chaîne de début comprend un code de code américain normalisé pour l'échange d'informations, ASCII, pour un « pointeur » de chaîne.

5. Procédé selon la revendication 4, **caractérisé en ce que** l'étape d'acquisition, par l'ONU ou l'ONT, des informations d'identité d'utilisateur à partir du message OMCI (S108) comprend :
la réception, par l'ONU ou l'ONT, du message OMCI ;
l'acquisition du pointeur dans le message OMCI ; et
l'acquisition des informations d'identité d'utilisateur associées au pointeur.

6. Procédé selon la revendication 5, **caractérisé en ce que** l'étape d'acquisition des informations d'identité d'utilisateur associées au pointeur comprend :
l'acquisition de l'ID ME du pointeur ;
l'acquisition de données de la ME correspondant à l'ID ME à partir d'une base de données d'infirmations de gestion, MIB ; et
l'analyse syntaxique des données de la ME et l'obtention des informations d'identité d'utilisateur.

7. Procédé selon l'une quelconque des revendications 1 à 6, **caractérisé en ce que** les informations d'identité d'utilisateur sont un nom d'utilisateur et un mot de passe d'utilisateur, dans lequel le seuil pour le nom d'utilisateur est de 50 caractères et le seuil pour le mot de passe d'utilisateur est de 25 caractères.

8. Appareil pour le traitement d'informations d'identité d'utilisateur dans un système de réseau optique passif gigabit, GPON, **caractérisé en ce qu'**il comprend :
un module de détermination (51) configuré pour déterminer qu'une longueur d'une chaîne des informations d'identité d'utilisateur utilisées pour une session de protocole d'ouverture de session, SIP, dépasse un seuil ;
un module de construction (52) configuré pour construire un message d'interface de commande et de gestion de terminal de réseau optique, OMCI, dans lequel le message OMCI transporte les informations d'identité d'utilisateur utilisées pour la session SIP ; et
un module de transmission (53) configuré pour transmettre le message OMCI à une unité de réseau optique, ONU, ou un terminal de réseau optique, ONT.

9. Appareil selon la revendication 8, **caractérisé en ce que** le module de construction (52) comprend :
un premier module de configuration (54) configuré pour créer une entité de gestion, ME, pour stocker les informations d'identité d'utilisateur ;
un deuxième module de configuration (55) configuré pour établir un pointeur et associer la ME au pointeur ; et
un troisième module de configuration (56) configuré pour stocker le pointeur dans le message OMCI.

10. Système pour le traitement d'informations d'identité d'utilisateur dans un système de réseau optique passif gigabit, GPON, comprenant : un terminal de ligne optique, OLT, (61), une unité de réseau optique, ONU, ou un terminal de réseau optique, ONT, (62), dans lequel
l'OLT (61) est **caractérisé par** :
un module de détermination (51) configuré pour déterminer qu'une longueur d'une chaîne d'informations d'identité d'utilisateur utilisées pour une session de protocole d'ouverture de session, SIP, dépasse un seuil ;
un module de construction (52) configuré pour construire un message d'interface de commande et de gestion de terminal de réseau optique, OMCI, dans lequel le message OMCI transporte les informations d'identité d'utilisateur utilisées pour la session SIP ; et
un module de transmission (53) configuré pour transmettre le message OMCI à l'ONU ou l'ONT ; et
l'ONU ou l'ONT (62) est configuré pour recevoir le message OMCI et acquérir les informations d'identité d'utilisateur à partir du message OMCI.
